# EUROPÄISCHE PATENTSCHRIFT

(11) **EP 2 335 466 B1**
(45) Veröffentlichungstag und Bekanntmachung des Hinweises auf die Patenterteilung: **17.04.2013**
(21) Anmeldenummer: 10401210.9
(22) Anmeldetag: 03.12.2010
(51) Int. Cl.: A01C 5/06

(54) **Sämaschine**
Sowing machine
Machine à semer

(30) Priorität: 10.12.2009 DE 102009044854
(43) Veröffentlichungstag der Anmeldung: 22.06.2011
(73) Patentinhaber: Amazonen-Werke H. Dreyer GmbH & Co. KG, 49205 Hasbergen (DE)
(72) Erfinder: Giehoff, Stefan, 32694, Dörentrup (DE); Pokriefke, Michael, 27798, Hude (DE); Schröder, Olaf, 27798, Hude (DE)

(56) Entgegenhaltungen:
- EP-A1- 2 208 409
- DE-A1- 2 018 178
- DE-A1-102005 042 459
- DE-A1-102008 008 553

## Beschreibung

Die Erfindung betrifft eine Sämaschine gemäß des Oberbegriffes des Patentanspruches 1.

Eine derartige Sämaschine ist durch die WO 2009/100833 A1 bekannt. Diese Sämaschine weist Säschare auf. Den Säscharen sind Leitvorrichtungen zugeordnet mittels derer das von den Säscharen aus den Säfurchen geworfene Erdreich aufgefangen und seitlich neben den Säfurchen und benachbarter Säfurchen abgelegt werden soll. Es hat sich jedoch gezeigt, dass bei zu schneller Fahrt das Erdreich von den Leitvorrichtungen dennoch zu weit geworfen wird.

Durch die DE 20 18 178 ist ein Pflug bekannt geworden, wobei mittels einer ersten Leitvorrichtung das Erdreich zur Seite geleitet wird und mit einer weiteren zugeordneten Leitfläche das Erdreich aufgefangen wird. Diese Anordnung ist jedoch sehr aufwendig, weil für die Auffangvorrichtung eine weitere separate Halterung zur Befestigung der Leitvorrichtung am Rahmen erforderlich ist.

Durch die DE 10 2005 042 459 A1 ist eine Sämaschine bekannt, wobei seitlich des Säschares an einer separaten Halterung eine kreisförmige und drehbar gelagerte Erdfangscheibe angeordnet ist. Diese Erdfangscheibe ist mit einer separaten Halterung am Rahmen angeordnet. Hinter dem Säschar ist eine Tiefenführungs- bzw. Andruckrolle angeordnet.

Eine ähnliche Sämaschine ist ausserdem in der DE 10 2008 008553A1 beschrieben. Der Erfindung liegt die Aufgabe zugrunde, mit einfachen Mitteln eine gezielte Ablage der von dem Säschar aus der Säfurche geförderten Erde zu schaffen.

Diese Aufgabe wird erfindungsgemäß dadurch gelöst, dass über eine Haltevorrichtung eine zumindest annähernd kreisförmigen Erdfangscheibe beabstandet zu der Tiefenführungsrolle an der Tiefenführungsrolle befestigt ist, dass die Erdfangscheibe den Außenumfang der Tiefenführungsrolle nicht überragt.

Infolge dieser Maßnahmen wird durch die kreisförmige Erdfangscheibe das von der Leitvorrichtung zur Seite geförderte Material aufgefangen und gezielt abgelegt. Durch die Anordnung der Erdfangscheibe über die Haltevorrichtung unmittelbar an der Tiefenführungsrolle ergibt sich eine sehr einfache Befestigung. Die Erdfangscheibe ist mit der gleichen Halterung und Lagerung wie die Tiefenführungsrolle am Rahmen angeordnet. Es ist also keine zusätzliche Halterung und Lagerung der Erdfangscheibe zur Befestigung am Rahmen erforderlich. Die Befestigung der Erdfangscheibe erfolgt allein über die Befestigung der Erdfangscheibe an der Tiefenführungsrolle. Dadurch, dass die Erdfangscheibe den Außenumfang der Tiefenführungsrolle nicht überragt, wird ein guter Bodenkontakt der Tiefenführungsrolle gewährleistet.

Damit die Erdfangscheibe den von dem Säschar aus der Säfurche geworfenen Boden entsprechend ablegen kann, ist vorgesehen, dass die Erdfangscheibe derart an der Tiefenführungsrolle angeordnet ist, dass sie zumindest annähernd die gesamte von dem Leitflächenelement umgeleitete Erde zur Begrenzung der Wurfweite der von der Leitvorrichtung umgeleiteten Erde auffängt.

Um sicherzustellen, dass die Halterungsvorrichtung, mit der die Erdfangscheibe an der Tiefenführungsrolle befestigt ist, das Auffangen der von der Leitvorrichtung zur Seite geförderten Boden nicht behindert, ist vorgesehen, dass die die Erdfangscheibe mit der Tiefenführungsrolle verbindenden Halterung zylinderförmig ausgebildet ist und einen wesentlich kleineren Durchmesser als die Tiefenführungsrolle und die Erdfangscheibe aufweist.

Eine vorteilhafte Dimensionierung der Halterung der Erdfangscheibe und der Tiefenführungsrolle zueinander lässt sich dadurch erreichen, dass der Durchmesser der zylinderförmigen Halterung kleiner als der halbe Durchmesser der Erdauffangscheibe oder der Tiefenführungsrolle ist.

Um auch unter schwierigen Bedingung die Erde entsprechend aufzufangen und zu leiten, ist vorgesehen, dass auf der Außenseite der zylinderförmigen Halterung Erdabweißelemente angeordnet sind.

Eine vorteilhafte Ausgestaltung der Erdfangscheibe lässt sich dadurch erreichen, dass die Erdfangscheibe aus einem flexiblen Material besteht. Infolge dieser Maßnahme kann sich die Erdfangscheibe auf schwierigen Bodenoberflächen vorteilhaft anpassen, darüber hinaus wird durch die Flexibilität des Materials sichergestellt, dass anhaftende Bodenteile sich von der Erdfangscheibe vorteilhaft lösen können.

Weitere Einzelheiten der Erfindung sind der Beispielsbeschreibung und den Zeichnungen zu entnehmen. Hierbei zeigen
- Fig. 1: ein erfindungsgemäßes Säschare in perspektivischer Darstellung,
- Fig. 2: das Säschar in der Ansicht von vorn,
- Fig. 3: ein weiteres Säschar in perspektivischer Darstellung und
- Fig. 4: das Säschar gemäß Fig. 3 in der Ansicht von vorn.

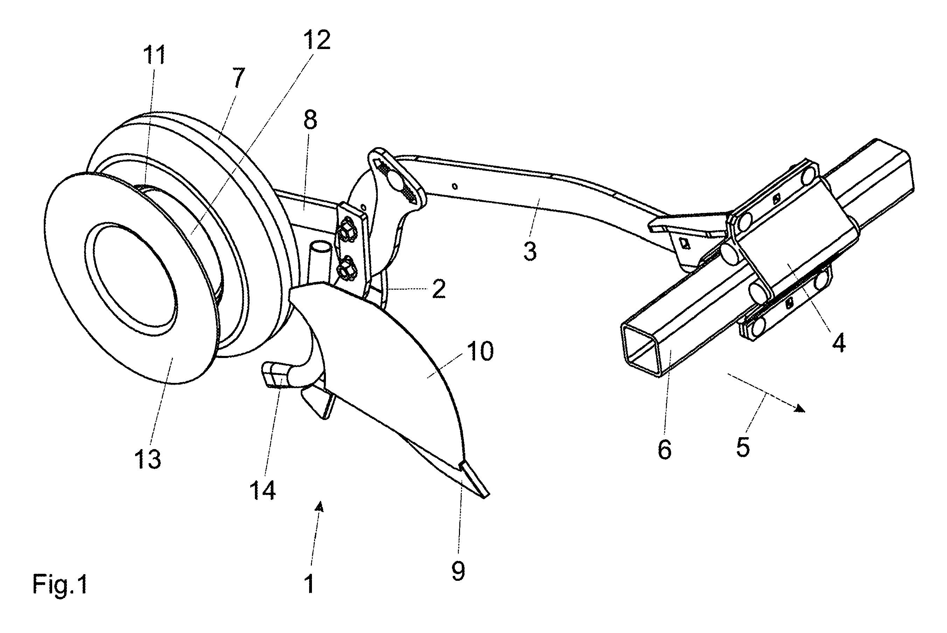

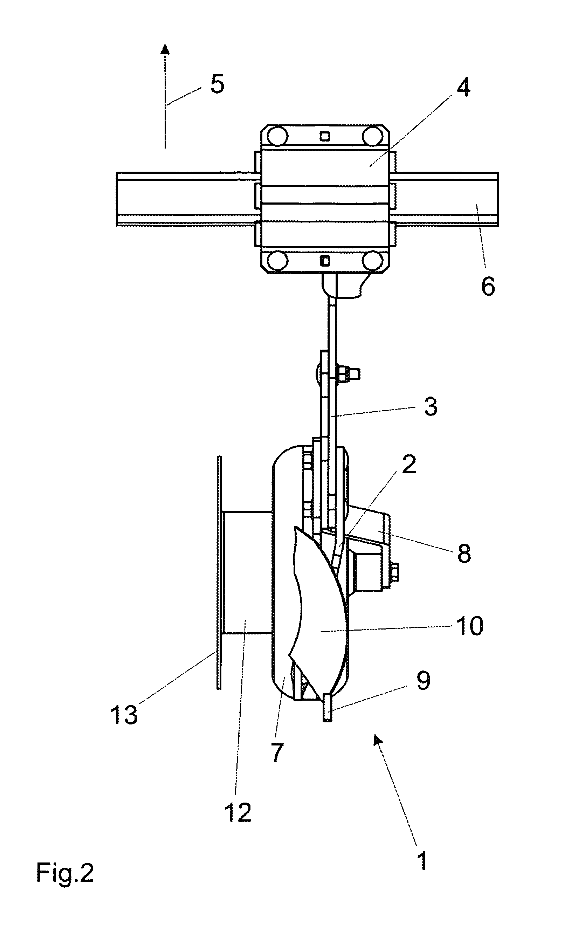

Das Säschar 1 gemäß den Fig. 1 und 2 ist an einem Scharbalken eines nicht dargestellten Rahmens einer Sämaschine angeordnet. Derartige Säschare 1 sind bei einer Sämaschine in mehreren Querreihen im Abstand hintereinander und seitlich beabstandet und versetzt zueinander angeordnet. Eine derartige Sämaschine ist u. a. für die Mulchsaat bzw. Direktsaat vorgesehen. Die Säschare 1 weisen einen Scharstiel 2 auf, der über einen Scharhalter 3 mittels einer Lagereinrichtung 4 an sich quer zur Fahrtrichtung 5 erstreckenden Scharbalken 6 des Rahmens der Sämaschine in aufrechter Ebene bewegbar angeordnet sind. Hinter den Säscharen 1 ist jeweils ein als Tiefenführungsrolle 7 ausgebildetes Tiefenführungselement in einstellbarer Weise über einen Haltearm 8 an dem Scharhalter 3 in einstellbarer Weise befestigt.

Der Scharstiel 2 weist an seinem unteren Ende ein nach unten ragendes Aufreißelement 9 auf. Dem Scharstiel 2 ist oberhalb des Aufreißelementes 9 ein als Leitvorrichtung 10 ausgebildetes in sich verdrehtes Leitflächenelement zugeordnet. Dieses Leitflächenelement 10 ist an dem Scharstiel 2 und an dem Aufreißelement 9 befestigt. Das Leitflächenelement 10 ist schräg zur Fahrtrichtung 5 verlaufend angeordnet und nur einseitig schräg verlaufend ausgerichtet ausgebildet. Die Leitvorrichtung 10 ist als pflugähnliches und in sich verdrehtes Leitflächenelement ausgebildet.

Die Tiefenführungsrolle 7 ist über ihre Felge 11 mittels eines Drehlagers drehbar an dem Haltearm 8 gelagert. An der Felge 11 der Tiefenführungsrolle 7 ist mittels einer zylinderförmigen Halterung 12 die kreisförmig ausgebildete Erdfangscheibe 13 angeordnet. Über die Tiefenführungsrolle 7 wird das Säschar 1 in der Tiefe geführt. Über die zylinderförmige Haltevorrichtung 12 ist die Erdfangscheibe 13 beabstandet zu der Tiefenführungsrolle 7 an der Tiefenführungsrolle 7 befestigt. Die Erdfangscheibe 13 überragt nicht den Außenumfang der Tiefenführungsrolle 7. Die zylinderförmige Halterung 12 weist einen wesentlich kleineren Durchmesser als die Tiefenführungsrolle 7 und die Erdfangscheibe 13 auf. Hierbei ist der Durchmesser der zylinderförmigen Halterung 12 kleiner als der halbe Durchmesser der Erdfangscheibe 13 oder der Tiefenführungsrolle 7. Die Erdfangscheibe 13 ist derart an der Tiefenführungsrolle 7 angeordnet, dass sie zumindest annähernd die gesamte von den Leitflächenelemente 10 umgeleitete Erde zur Begrenzung der Wurfweite der von der Leitvorrichtung 10 umgeleiteten Erde auffängt.

Die Funktionsweise der Erdfangscheibe 13 in Verbindung mit der Leitvorrichtung 10 ist folgende:

Durch das Aufreißelement 9 wird der Boden zur Schaffung einer Säfurche aufgerissen. Durch das in sich verdrehte Leitelement 10 wird die Erde zur Schaffung einer Säfurche zur Seite geleitet. Die hinter dem Leitelement 10 und dem Aufreißelement 9 an der Tiefenführungsrolle 7 angeordnete Erdfangscheibe 13 fängt die von der Leitvorrichtung 10 zur Seite geleitete Erde auf und führt sie in die Säfurche zur Bedeckung des durch die Saatzuführleitung 14 geförderte und in der Säfurche abgelegte Saatgut zurück. Die Erdfangscheibe 13 dreht sich mit der Andruckrolle 7. Die Erdfangscheibe 13 kann aus einem flexiblen Material hergestellt sein.

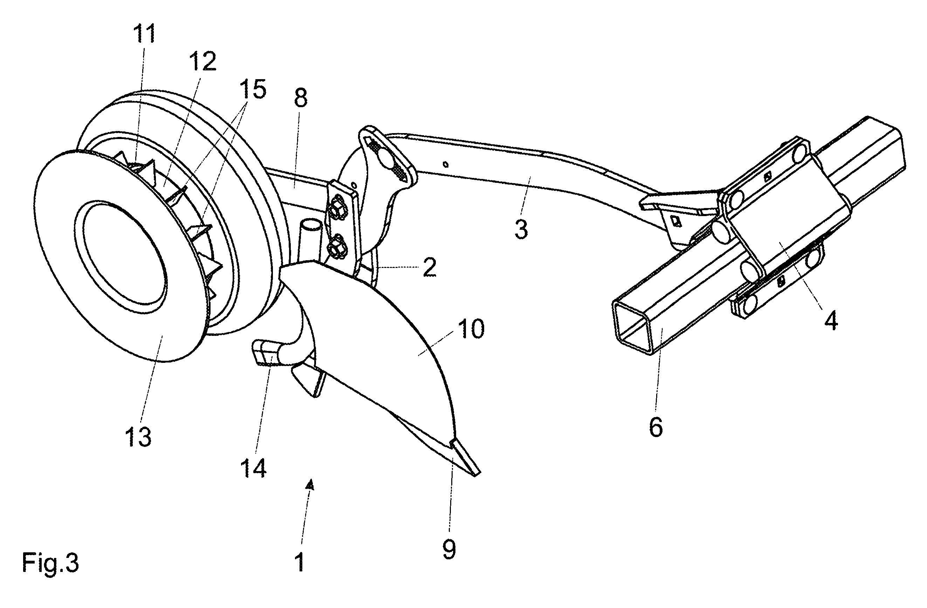

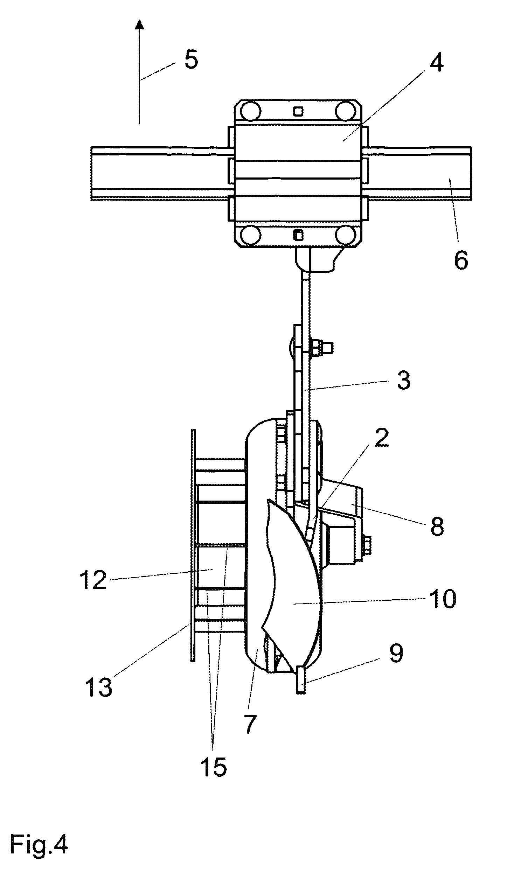

Das Säschar gemäß Fig. 3 und 4 unterscheidet sich von dem Säschar gemäß der Fig. 1 und 2 dadurch, dass auf der Außenseite der zylinderförmigen Halterung 12 Erdabweiselemente 15 angeordnet sind. Mittels dieser Erdabweiselemente 15 wird eine verbesserte Zurückleitung der von der Erdfangscheibe 13 aufgefangenen Erde zurück in die Säfurche erzielt.

## Patentansprüche

1. Sämaschine zum Ausbringen von Saatgut und/oder Düngemitteln mit einem Rahmen, Vorratsbehälter, Säscharen (1) und Leitvorrichtungen (10) zum gezielten Ablegen des von den zumindest einem Scharstiel (2) aufweisenden Säscharen (1) beim Schaffen der Säfurchen aus der Säfurche geworfenen Bodenmaterials, wobei die Leitvorrichtung (10) als pflugähnliches in sich verdrehtes Leitflächenelement ausgebildet ist, wobei das Leitflächenelement an dem zumindest an einem Scharstiel (2) befestigten Säschar (1) befestigt ist, wobei die Leitvorrichtung schräg zur Fahrtrichtung verlaufend angeordnet und nur einseitig schräg ausgerichtet verlaufend ausgebildet ist, wobei hinter dem Säschar (1) ein mit dem Säschar (1) über eine Haltevorrichtung (8) verbundene und das Säschar (1) in der Tiefe führende Tiefenführungsrolle (7) angeordnet ist, **dadurch gekennzeichnet, dass** über eine Haltevorrichtung (12) eine zumindest annähernd kreisförmige Erdfangscheibe (13) beabstandet zu der Tiefenführungsrolle (7) an der Tiefenführungsrolle (7) befestigt ist, dass die Erdfangscheibe (13) den Außenumfang der Tiefenführungsrolle (7) nicht überragt.

2. Sämaschine nach Anspruch 1, **dadurch gekennzeichnet, dass** die Erdfangscheibe (13) derart an der Tiefenführungsrolle (7) angeordnet ist, dass sie zumindest annähernd die gesamte von dem Leitflächenelement (10) umgeleitete Erde zur Begrenzung der Wurfweite der von der Leitvorrichtung (10) umgeleiteten Erde auffängt.

3. Sämaschine nach zumindest einem der vorstehenden Ansprüche, **dadurch gekennzeichnet, dass** die die Erdfangscheibe (13) mit der Tiefenführungsrolle (7) verbindenden Halterung (10) zylinderförmig ausgebildet ist und einen wesentlich kleineren Durchmesser als die Tiefenführungsrolle (7) und die Erdfangscheibe (13) aufweist.

4. Sämaschine nach zumindest einem der vorstehenden Ansprüche, **dadurch gekennzeichnet, dass** der Durchmesser der zylinderförmigen Halterung (10) kleiner als der halbe Durchmesser der Erdauffangscheibe (13) oder der Tiefenführungsrolle (7) ist.

5. Sämaschine nach zumindest einem der vorstehenden Ansprüche, **dadurch gekennzeichnet, dass** auf der Außenseite der zylinderförmigen Halterung (10) Erdabweißelemente (15) angeordnet sind.

6. Sämaschine nach zumindest einem der vorstehenden Ansprüche, **dadurch gekennzeichnet, dass** die Erdfangscheibe (13) einen gleichen oder kleineren Durchmesser als die Tiefenführungsrolle (7) aufweist.

7. Sämaschine nach zumindest einem der vorstehenden Ansprüche, **dadurch gekennzeichnet, dass** die Erdfangscheibe (13) einen gleichen oder größeren Durchmesser als die Tiefenführungsrolle (7) aufweist.

8. Sämaschine nach zumindest einem der vorstehenden Ansprüche, **dadurch gekennzeichnet, dass** die Erdfangscheibe (13) aus einem flexiblen Material besteht.

## Claims

1. Seed drill for discharging seed and/or fertilizers, having a frame, storage container, sowing coulters (1) and guide devices (10) for the targeted deposition of the soil material thrown out of the sowing furrow by the sowing coulters (1), having at least one coulter shaft (2), when creating the sowing furrow, wherein the guide device (10) is in the form of a plough-like, twisted guide face element, wherein the guide face element is fastened to the sowing coulter (1), which is fastened at least to a coulter shaft (2), wherein the guide device is arranged in a manner extending obliquely with respect to the direction of travel and is formed such as to extend in an obliquely oriented manner only on one side, wherein a depth guiding roller (7) which is connected to the sowing coulter (1) via a holding device (8) and guides the depth of the sowing coulter (1) is arranged behind the sowing coulter (1), **characterized in that** an at least approximately circular earth catching disc (13) is fastened to the depth guiding roller (7), in a manner spaced apart from the depth guiding roller (7), via a holding device (12), and **in that** the earth catching disc (13) does not protrude beyond the outer circumference of the depth guiding roller (7).

2. Seed drill according to Claim 1, **characterized in that** the earth catching disc (13) is arranged on the depth guiding roller (7) such that it intercepts at least approximately all of the earth deflected by the guide face element (10) in order to limit the throwing distance of the earth deflected by the guide device (10).

3. Seed drill according to at least one of the preceding claims, **characterized in that** the holder (12) connecting the earth catching disc (13) to the depth guiding roller (7) is formed in a cylindrical manner and has a substantially smaller diameter than the depth guiding roller (7) and the earth catching disc (13).

4. Seed drill according to at least one of the preceding claims, **characterized in that** the diameter of the cylindrical holder (12) is smaller than half the diameter of the earth catching disc (13) or of the depth guiding roller (7).

5. Seed drill according to at least one of the preceding claims, **characterized in that** earth deflecting elements (15) are arranged on the outer side of the cylindrical holder (12).

6. Seed drill according to at least one of the preceding claims, **characterized in that** the earth catching disc (13) has a diameter which is the same as or smaller than that of the depth guiding roller (7).

7. Seed drill according to at least one of the preceding claims, **characterized in that** the earth catching disc (13) has a diameter which is the same as or larger than that of the depth guiding roller (7).

8. Seed drill according to at least one of the preceding claims, **characterized in that** the earth catching disc (13) consists of a flexible material.

## Revendications

1. Machine à semer pour épandre des semences et/ou des engrais, comprenant un châssis, un réservoir, des socs de semoir (1) et des dispositifs de guidage (10) pour déposer de manière ciblée le matériau de sol projeté hors du sillon de semis par les socs de semoir (1) comprenant au moins une tige de soc (2) lors de la réalisation des sillons de semis, le dispositif de guidage (10) étant réalisé sous forme d'élément de surface de guidage gauchi similaire à une charrue, l'élément de surface de guidage étant fixé au soc de semoir (1) fixé au moins à une tige de soc (2), le dispositif de guidage étant disposé de manière à s'étendre obliquement par rapport à la direction d'avancement et étant réalisé de manière à s'étendre de façon orientée obliquement seulement d'un côté, un rouleau de guidage en profondeur (7) relié au soc de semoir (1) par l'intermédiaire d'un dispositif de retenue (8) et guidant le soc de semoir (1) en profondeur étant disposé derrière le soc de semoir (1), **caractérisée en ce que**, par l'intermédiaire d'un dispositif de support (12), un disque de collecte de terre (13) au moins approximativement circulaire est fixé au rouleau de guidage en profondeur (7) de manière espacée du rouleau de guidage en profondeur (7), et **en ce que** le disque de collecte de terre (13) ne dépasse pas au-delà de la périphérie extérieure du rouleau de guidage en profondeur (7).

2. Machine à semer selon la revendication 1, **caractérisée en ce que** le disque de collecte de terre (13) est disposé sur le rouleau de guidage en profondeur (7) de telle sorte qu'il collecte au moins approximativement toute la terre déviée par l'élément de surface de guidage (10) pour limiter la portée de projection de la terre déviée par le dispositif de guidage (10).

3. Machine à semer selon au moins l'une quelconque des revendications précédentes, **caractérisée en ce que** le support (12) reliant le disque de collecte de terre (13) au rouleau de guidage en profondeur (7) est réalisé sous forme cylindrique et présente un diamètre considérablement plus petit que ceux du rouleau de guidage en profondeur (7) et du disque de collecte de terre (13).

4. Machine à semer selon au moins l'une quelconque des revendications précédentes, **caractérisée en ce que** le diamètre du support cylindrique (12) est plus petit que la moitié du diamètre du disque de collecte de terre (13) ou du rouleau de guidage en profondeur (7).

5. Machine à semer selon au moins l'une quelconque des revendications précédentes, **caractérisée en ce que** des éléments de déviation de terre (15) sont disposés sur le côté extérieur du support cylindrique (12).

6. Machine à semer selon au moins l'une quelconque des revendications précédentes, **caractérisée en ce que** le disque de collecte de terre (13) présente un diamètre inférieur ou égal à celui du rouleau de guidage en profondeur (7).

7. Machine à semer selon au moins l'une quelconque des revendications précédentes, **caractérisée en ce que** le disque de collecte de terre (13) présente un diamètre supérieur ou égal à celui du rouleau de guidage en profondeur (7).

8. Machine à semer selon au moins l'une quelconque des revendications précédentes, **caractérisée en ce que** le disque de collecte de terre (13) est constitué d'un matériau flexible.
